# EUROPÄISCHE PATENTSCHRIFT

(11) **EP 2 848 471 B1**
(45) Veröffentlichungstag und Bekanntmachung des Hinweises auf die Patenterteilung: **08.06.2016**
(21) Anmeldenummer: 14002506.5
(22) Anmeldetag: 18.07.2014
(51) Int. Cl.: B60R 1/00, B60K 35/00

(54) **Verfahren und Vorrichtung zur Anzeige von visuellen Informationen in einem Fahrzeug, insbesondere in einem Nutzfahrzeug**
Method and device for displaying visual information in a vehicle, in particular a commercial vehicle
Procédé et dispositif d'affichage d'informations visuelles dans un véhicule, notamment dans un véhicule utilitaire

(30) Priorität: 14.09.2013 DE 102013015291
(43) Veröffentlichungstag der Anmeldung: 18.03.2015
(73) Patentinhaber: MAN Truck & Bus AG, 80995 München (DE)
(72) Erfinder: Dörner, Karlheinz, 85757 Karlsfeld (DE); Zimmermann, Andreas, 80995 München (DE); Heyes, Daniel, 81247 München (DE); Michel, Britta, 81675 München (DE)
(74) Vertreter: Liebl, Thomas

(56) Entgegenhaltungen:
- EP-A1- 2 420 410
- EP-A2- 1 966 006
- WO-A1-2005/021314
- DE-A1-102010 013 233
- DE-U1-202008 012 289

## Beschreibung

Die Erfindung betrifft eine Vorrichtung zur Anzeige von visuellen Informationen in einem Fahrzeug, insbesondere in einem Nutzfahrzeug, nach dem Oberbegriff des Anspruchs 1 sowie ein Verfahren zur Anzeige von visuellen Informationen in einem Fahrzeug, insbesondere in einem Nutzfahrzeug, nach dem Oberbegriff des Anspruchs 9.

Es ist allgemein bekannt, in einem Fahrzeug, wie beispielsweise einem Nutzfahrzeug, Bildschirme bzw. Monitoren als Anzeigegeräte zu verwenden, mittels denen dem Fahrer bestimmte Informationen angezeigt werden. So ist es beispielsweise allgemein bekannt, an Fahrzeugen, insbesondere an mit Gütern beladbaren Nutzfahrzeugen, Überwachungskameras anzuordnen, mittels denen die Fahrzeugumgebung bildlich erfasst werden kann, wobei die erfassten Bilder dann im Inneren des Fahrzeugs auf dem Bildschirm bzw. Monitor angezeigt werden. Damit wird dem Fahrer Gelegenheit gegeben, zum Beispiel bei geparktem Fahrzeug, die nähere Fahrzeugumgebung zu überwachen. Eine derartige Umfeldüberwachung dient zum Beispiel der Sicherheit auf Rastplätzen bei abgestelltem Fahrzeug. Zum anderen kann mit einer derartigen Umfeldüberwachung aber auch kontrolliert werden, ob sich das Fahrzeug Hindernissen annähert bzw. ob sich Hindernisse an ein Fahrzeug annähern.

Insbesondere für Fahrer von Lastkraftwagen, die im Fernverkehr unterwegs sind, besteht oftmals die Notwendigkeit der Verwendung eines Spiegels, zum Beispiel um sich im Fahrzeug zu rasieren. Da derartige Nutzfahrzeuge regelmäßig mit keinem Innenspiegel ausgestattet sind, wird hierfür ein separater Handspiegel mitgeführt, der vom Fahrer nur schwierig im Fahrzeug zu positionieren ist und daher, zum Beispiel während des Räsierens, oftmals mit der einen Hand zu halten bzw. festzuhalten ist. Auch wird hierfür oftmals der relativ großbauende Seiten- bzw. Außenspiegel verwendet, der hierfür regelmäßig verstellt und nachher wieder eingestellt werden muss. Letzteres erfordert zudem das Öffnen des Fensters, was Aus der EP 2 420 410 A1 ist ein Verfahren zur Darstellung eines Bilds in einem Fahrzeug bekannt, bei dem zunächst ein auf einem Fahrzeugsitz sitzender Insassen des Fahrzeugs bildlich erfasst wird und anschließend das erfasste Bild dem Insassen mittels eines Bildschirms angezeigt wird. In einer bevorzugten Ausgestaltung wird dem Insassen mittels des Bildschirms sein eigenes Spiegelbild angezeigt. Durch diese Anzeige kann auf einen herkömmlichen Schminkspiegel verzichtet werden. Die Aktivierung der Anzeige des Spiegelbilds erfolgt hier durch Betätigung eines durch den Insassen betätigbaren Betätigungselements.

Ausgehend von diesem bekannten Stand der Technik ist es Aufgabe der vorliegenden Erfindung, eine Vorrichtung und ein Verfahren zur Anzeige von visuellen Informationen in einem Fahrzeug, insbesondere in einem Nutzfahrzeug, so weiterzubilden, dass deren Gebrauchszweck für einen Benutzer wesentlich erhöht wird.

Diese Aufgabe wird gelöst mit den Merkmalen der unabhängigen Patentansprüche. Vorteilhafte Ausgestaltungen hierzu sind Gegenstand der darauf rückbezogenen Unteransprüche.

Gemäß Anspruch 1 wird eine Vorrichtung zur Anzeige von Informationen in einem Fahrzeug, insbesondere in einem Nutzfahrzeug, vorgeschlagen, die einen im Fahrzeug, insbesondere in einem Fahrerhaus eines Nutzfahrzeugs, angeordneten Bildschirm bzw. Monitor aufweist, mittels dem Informationen visuell angezeigt werden können. Dem Bildschirm ist eine Einrichtung zugeordnet, mittels der ein mittels wenigstens einer Kamera aufgenommenes Gesicht eines auf bzw. in den Bildschirm blickenden Betrachters in der Art eines Spiegelbildes auf dem Bildschirm anzeigbar ist. Zudem ist dem Bildschirm eine Gesichtserfassungseinrichtung zugeordnet, die so ausgebildet ist, dass diese bei Vorliegen definiert vorgegebener Kriterien das mittels der wenigstens einen Kamera der Gesichtserfassungseinrichtung aufgenommene Gesicht in der Art eines Spiegelbildes auf dem Bildschirm anzeigt. Erfindungsgemäß wird von der Gesichtserfassungseinrichtung, insbesondere einer Auswerteeinrichtung der Gesichtserfassungseinrichtung, als Kriterium für eine Gesichtsanzeige auf dem Bildschirm ermittelt, ob dem Bildschirm ein Gesicht für eine definierte Zeitdauer zugewandt ist und/oder ob sich das Gesicht in einen definierten Nahbereich zum Bildschirm befindet. Alternativ und/oder zusätzlich ist die Gesichtserfassungseinrichtung mit einer Aktivierungseinrichtung gekoppelt, die die Gesichtserfassungseinrichtung bei bewegtem Fahrzeug deaktiviert und die die Aktivierung der Gesichtserfassungseinrichtung bei Fahrzeugstillstand freigibt.

Mit den beiden Kriterien, ob dem Bildschirm ein Gesicht für eine definierte Zeitdauer zugewandt ist und ob sich das Gesicht in einen definierten Nahbereich zum Bildschirm befindet, die einzeln, besonders bevorzugt aber kumulativ, erfüllt sein können bzw. müssen, kann somit auf zuverlässige Art und Weise, zum Beispiel mittels einer Auswerteeinrichtung der Gesichtserfassungseinrichtung, darauf geschlossen werden, dass die Spiegelbildfunktion tatsächlich aktiviert werden soll. Mittels der Aktivierungseinrichtung ist sichergestellt, dass die Spiegelbildfunktion nicht bei bewegtem Fahrzeug benutzt wird und sich der Fahrer auf den Verkehr bzw. die Fahrstrecke konzentrieren kann.

Mit einer derartigen erfindungsgemäßen Lösung wird der Gebrauchszweck eines Bildschirms wesentlich erhöht, da dieser bei Bedarf als Spiegel benutzt werden kann. Ein derartiger Spiegel kann zum Beispiel von Fernfahrern als Rasierspiegel verwendet werden, so dass auf den Gebrauch von schwierig zu positionierenden und zu hantierenden Zusatzspiegeln verzichtet werden kann. Auch braucht dann vom Fahrer eines Nutzfahrzeugs hierfür nicht der sich an der Fahrzeugaußenseite befindende Außenspiegel herangezogen werden und dessen Einstellung verändert werden.

Die Gesichtserfassungseinrichtung weist bevorzugt eine Auswerteeinrichtung auf, mittels der die von der Gesichtserfassungseinrichtung erfassten und/oder die der Gesichtserfassungseinrichtung übermittelten Daten ausgewertet werden können, wobei die Auswerteeinrichtung bei Vorliegen der definiert vorgegebenen Kriterien die Anzeige des mittels der wenigstens einen Kamera aufgenommenen Gesichtes als Spiegelbild auf dem Bildschirm freigibt. Mittels einer derartigen Auswerteeinrichtung kann eine funktionssichere und zuverlässige Bewertung der erfassten Daten erfolgen und somit eine Fehlaktivierung zuverlässig ausgeschlossen werden.

Besonders bevorzugt ist in diesem Zusammenhang eine Ausgestaltung, bei der die Gesichtserfassungseinrichtung wenigstens einen, vorzugsweise am Bildschirm angeordneten, Abstandssensor aufweist, mittels dem ein Abstand eines Gesichtes zu dem Bildschirm erfasst und der Auswerteeinrichtung der Gesichtserfassungseinrichtung übermittelt werden kann. Mittels der Auswerteeinrichtung wird dann überprüft, ob sich das Gesicht in dem definiert vorgegebenen Nahbereich zum Bildschirm befindet und somit festgelegt, ob das Kriterium für die Aktivierung der Gesichtserfassungseinrichtung vorliegt oder nicht.

Alternativ oder zusätzlich dazu können die von der wenigstens einen Kamera aufgenommenen Gesichtsbilddaten der Auswerteeinrichtung zugeführt werden, die dann ein dem Bildschirm zugewandtes Gesicht als Gesicht identifiziert, was zum Beispiel mittels einer Gesichtserkennungssoftware und/oder einer Eye-Tracking-Sftware erfolgen kann. Eine besonders einfache Lösung sieht vor, dass die Gesichtserkennung als nicht-personenbezogene Gesichtserkennung durchgeführt wird, weil dann jedes in den Bildschirm blickende Gesicht die Spiegelfunktion der erfindungsgemäßen Vorrichtung aktivieren kann.

Grundsätzlich braucht die wenigstens eine Kamera bzw. wenigstens ein Teil der eventuell mehreren Kameras nur in der Nähe des Bildschirms angeordnet zu sein, sofern dadurch sichergestellt ist, dass mit der wenigstens einen Kamera das Gesicht des Bildschirm-Betrachters frontal von vorne aufgenommen wird und dementsprechend als Spiegelbild auf dem Bildschirm zur Anzeige gebracht werden kann. Eine besonders kompakte und baulich einfach zu realisierende Lösung sieht jedoch vor, die wenigstens eine Kamera der Gesichtserfassungseinrichtung unmittelbar am Bildschirm selbst anzuordnen, zum Beispiel am Gehäuse des Bildschirms. An dieser Stelle sei ausdrücklich erwähnt, dass die Begrifflichkeit Bildschirm bzw. Monitor hier in einem umfassenden Sinne zu verstehen ist und selbstverständlich auch das Gehäuse und weitere Bauteile von dieser Begrifflichkeit mit umfasst sind.

Gemäß einer besonders bevorzugten Ausgestaltung ist vorgesehen, dass der Bildschirm Bestandteil einer fahrzeugseitig angeordneten Anzeigevorrichtung ist, mittels der im Fahrbetrieb und/oder im Stillstand des Fahrzeugs standardmäßig fahr- und/oder fahrzeugspezifische Informationen anzeigbar sind, das heißt, wenn die Spiegelbildfunktion nicht benötigt wird bzw. nicht aktiviert ist. Beispielsweise kann der Bildschirm Bestandteil eines fahrzeugseitig angeordneten Navigationssystems sein, mittels dem bei nicht aktiver Spiegelbild-Funktion auf dem Bildschirm Navigationsinformationen anzeigbar sind. Alternativ oder zusätzlich kann der Bildschirm aber auch mit wenigstens einer am Fahrzeug angeordneten Umfelderfassungseinrichtung, die zum Beispiel durch eine bzw. mehrere am Fahrzeug angeordnete Umfeld-Kameras gebildet ist, dergestalt gekoppelt sein, dass bei nicht aktiver Gesichtserfassungseinrichtung auf dem Bildschirm dann die von der wenigstens einen Umfeld-Erfassungseinrichtung erfassten Umgebungsinformationen bzw. -bilder angezeigt werden können. Auch die Anzeige dieser Umgebungsinformationen bzw. Umgebungsbilder kann wiederum von der Fahrzeugbewegung bzw. Fahrzeuggeschwindigkeit abhängig gemacht werden. So können zum Beispiel die Umfeld-Erfassungseinrichtungen nur dann aktiviert sein, wenn eine bestimmte Mindestgeschwindigkeit des Fahrzeugs nicht überschritten wird, wie dies zum Beispiel beim Rückwärtsfahren der Fall ist bzw. beim Stillstand des Fahrzeugs der Fall ist.

Der Bildschirm ist vorzugsweise fest im Fahrzeug angeordnet und/oder verbaut, insbesondere im Bereich einer Instrumententafel und/oder im Innenraum dachseitig und/oder im Bereich einer Schlafkabine eines Führerhauses und/oder an einer Fahrzeugsäule, insbesondere einer A- und/oder B-Säule, angeordnet und/oder verbaut. In Verbindung mit einer Fahrzeugsäule kann der Bildschirm zum Beispiel als Bestandteil derselben in diese integriert sein und zum Beispiel bei nicht genutzter Spiegelbild-Funktion die mittels einer, bevorzugt ebenfalls in die jeweilige Fahrzeugsäule integrierten Kamera aufgenommene Umgebung auf dem Bildschirm abgebildet wird, wodurch somit eine transparente Fahrzeugsäule erhalten wird, bei der die hinter den Säulen vorhandenen Bereiche sichtbar gemacht werden, das heißt die Säulen quasi durchsichtig erscheinen. Es versteht sich, dass der säulenseitig integrierte Bildschirm selbstverständlich dem Fahrzeuginnenraum zugewandt ist und dass selbstverständlich auch bloß ein Teil der Fahrzeugsäulen mit derartigen Bildschirmen versehen sein kann.

Ferner kann der Bildschirm aus- und/oder abfahrbar und/oder aus- und/oder abklappbar und/oder drehbar gelagert sein, um den Bildschirm einfach in die gewünschte bzw. optimale Position bringen zu können.

Die sich mit dem erfindungsgemäßen Verfahren ergebenden Vorteile wurden bereits zuvor in Verbindung mit der Würdigung der erfindungsgemäßen Vorrichtung mitsamt deren optionaler Ausgestaltungen ausführlich erläutert, so dass diesbezüglich auf die zuvor gemachten Ausführungen verwiesen wird.

Ferner wird die bevorzugte Verwendung der Vorrichtung bzw. der erfindungsgemäßen Verfahrensführung in Verbindung mit einem Fahrzeug, insbesondere in Verbindung mit einem Nutzfahrzeug, beansprucht.

Die Erfindung wird nachfolgend anhand einer Zeichnung näher erläutert.

Es zeigen:
- Fig. 1: schematisch ein Ablaufdiagramm einer beispielhaften Ausführung zur erfindungsgemäßen Gesichtserfassung mit Spiegelbildfunktion,
- Fig. 2: schematisch ein Blockschaltbild einer beispielhaften Ausführungsform,
- Fig. 3: schematisch eine beispielhafte Draufsicht auf ein Nutzfahrzeug mit einer erfindungsgemäßen Vorrichtung, und
- Fig. 4: schematisch eine alternative Ausführungsform mit einer manuell zur Spiegelbildfunktion umschaltbaren Vorrichtung.

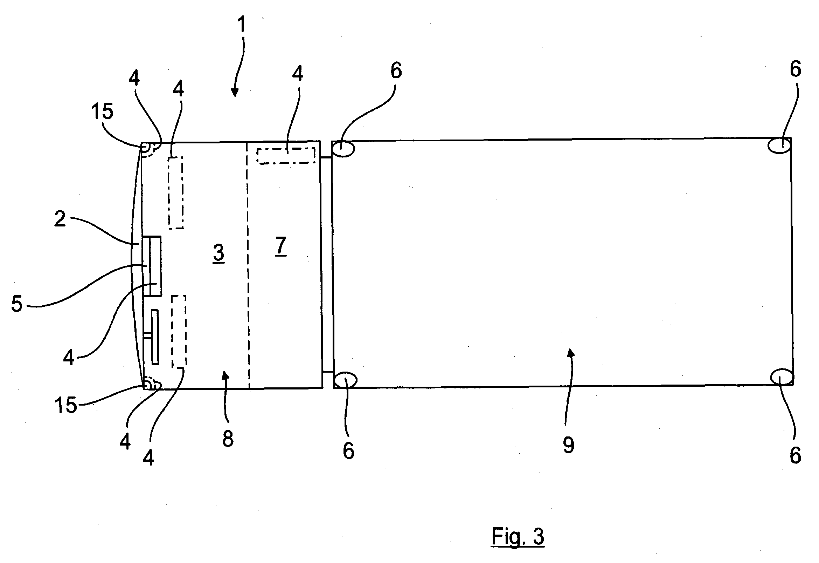

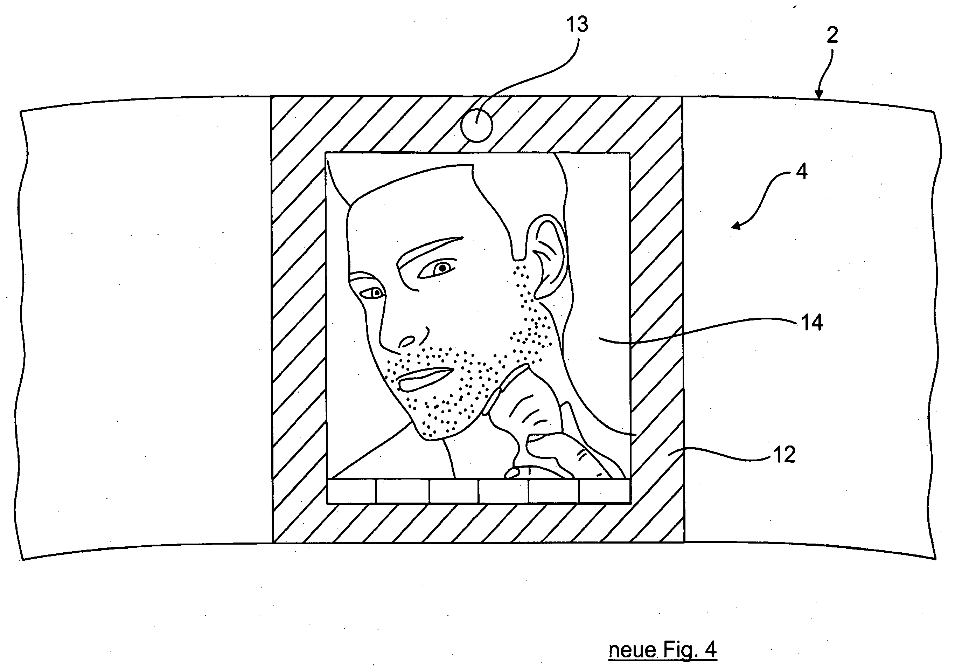

Die Fig. 3 zeigt lediglich schematisch und beispielhaft eine Draufsicht auf ein Nutzfahrzeug 1, bei dem hier beispielhaft im mittleren Bereich einer Instrumententafel 2 eines Fahrerhauses 3 ein Bildschirm 4 angeordnet ist, dem eine hier lediglich äußerst schematisch dargestellte Gesichtserfassungseinrichtung 5 zugeordnet ist. Diese Gesichtserfassungseinrichtung 5 weist, wie dies der Fig. 4 zu entnehmen ist, wenigstens eine am Bildschirm 4 oder zumindest bildschirmnah angeordnete Bildschirmkamera sowie wenigstens einen am Bildschirm 4 oder zumindest bildschirmnah angeordneten Abstandssensor auf, deren Funktionsweise nachfolgend noch näher erläutert werden. Der Bildschirm 4 könnte im Innenraum auch deckenseitig fest angeordnet bzw. verbaut sein und zum Beispiel bei Bedarf ab- bzw. ausgeklappt werden bzw. drehbar sein, was in der Fig. 3 lediglich äußerst schematisch und strichliert für den Fahrerbereich dargestellt ist. Auch eine zusätzliche oder alternative beifahrerseitige Anordnung eines derartigen Bildschirms 4, zum Beispiel instrumententafelseitig oder deckenseitig sowie gegebenenfalls aus- bzw. abklappbar bzw. drehbar, ist selbstverständlich möglich, was in der Fig. 3 strichpunktiert dargestellt ist. Für den Fall, dass im Fahrerhaus 3 eine Schlafkabine 7 vorhanden sein sollte, kann ein Bildschirm 4 auch zusätzlich oder alternativ in diesem Bereich angeordnet sein, zum Beispiel seitenwandseitig oder deckenseitig, was in der Fig. 3 ebenfalls wiederum lediglich äußerst schematisch und strichpunktiert dargestellt ist.

In Verbindung mit einer Fahrzeugsäule, hier lediglich beispielhaft einer oder beiden A-Säulen 15, kann der Bildschirm zum Beispiel als Bestandteil derselben in diese integriert sein und zum Beispiel bei nicht genutzter Spiegelbild-Funktion die mittels einer in die A-Säule integrierten Kamera aufgenommene Umgebung auf dem Bildschirm abgebildet wird, wodurch somit eine transparente Fahrzeugsäule erhalten wird, bei der die hinter den A-Säulen 15 vorhandenen Bereiche sichtbar gemacht werden, das heißt die Säulen quasi durchsichtig erscheinen.

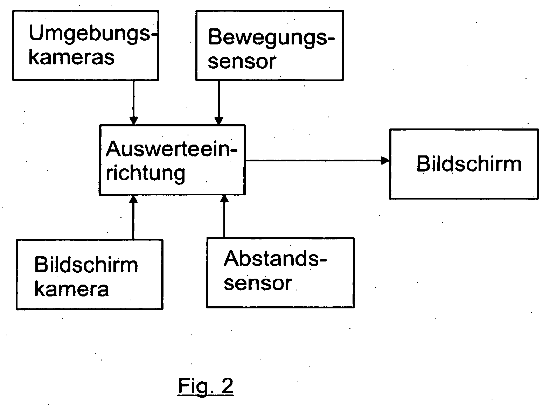

Ferner sind an der Außenseite des hier lediglich beispielhaft als Sattelzug mit Zugmaschine 8 und Auflieger 9 ausgebildeten Nutzfahrzeugs 1 Umfeld-Kameras 6 angeordnet, hier beispielhaft in den eckseitigen Bereichen des Aufliegers 9 angeordnet. Die Umfeld-Kameras 6 liefern, wie dies wiederum der Fig. 2 entnommen werden kann, Umgebungsbilder an die Auswerteeinrichtung der Gesichtserfassungseinrichtung 5. Diese Umgebungsbilder oder andere Informationen, zum Beispiel Navigationsinformationen und/oder Streckendaten und/oder Topographiedaten und/oder Fahrerinformationen etc., können bzw. werden auf dem Bildschirm 4 standardmäßig, das heißt im normalen Fahrbetrieb bzw. bei nicht aktivierter Gesichtserfassungseinrichtung 5, angezeigt.

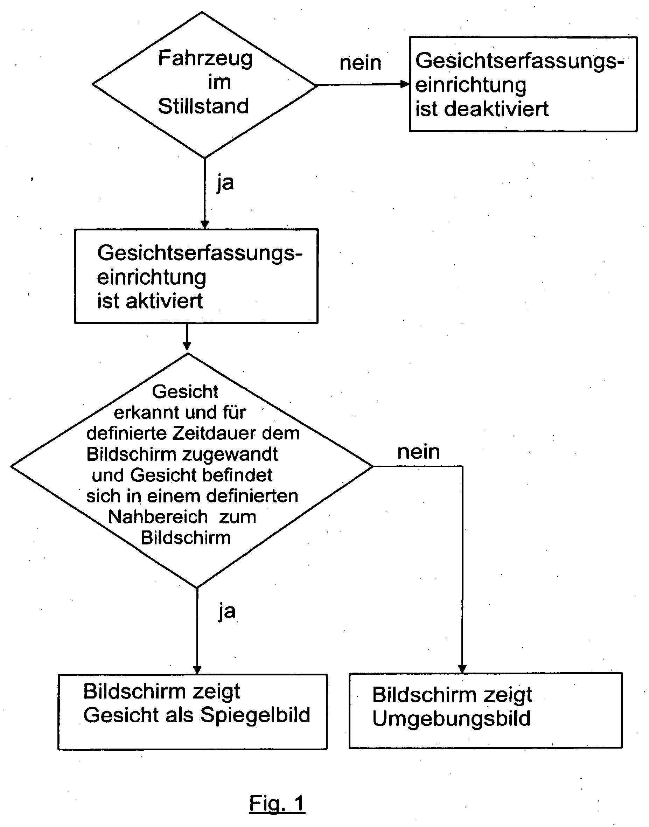

Wie dem Ablaufdiagramm von Fig. 1 zu entnehmen ist, wird für den Fall, dass ein Betrachter die Spiegelbildfunktion des im Fahrzeuginnenraum, zum Beispiel im Führerhaus 3 eines Nutzfahrzeugs 1 angeordneten Bildschirms 4 bzw. Monitors aktivieren will, von der Auswerteeinrichtung zuerst geprüft, ob sich das Fahrzeug tatsächlich im Stillstand befindet, was zum Beispiel mittels der in Fig. 2 gezeigten Bewegungssensoren erfolgen kann. Diese können zum Beispiel die Raddrehzahl erfassende Raddrehzahlsensoren sein, um nur ein Beispiel zu nennen.

Bejahendenfalls wird die dem Bildschirm 4 zugeordnete Gesichtserfassungseinrichtung 5 aktiviert und von deren Auswerteeinrichtung, anhand der von der Bildschirmkamera gelieferten Bilddaten ermittelt, ob ein Gesicht in den Bildschirm blickt bzw. dieses Gesicht für eine definierte, vorgegebene Zeitdauer dem Bildschirm 4 zugewandt ist. Weiter erfasst wenigstens ein am Bildschirm 4 angeordneter Abstandssensor, den Abstand des Gesichtes zum Bildschirm, so dass die Auswerteeinrichtung auf der Basis dieser Abstandsdaten ermittelt, ob sich das Gesicht in einem definierten Nahbereich zum Bildschirm 4 befindet.

Werden beide Kriterien bejaht (gegebenenfalls kann auch nur eines der beiden Kriterien vorgegeben werden), steuert die Auswerteeinrichtung den Bildschirm 4 dergestalt an, dass dort das Gesicht des Betrachters als Spiegelbild 14 angezeigt wird, wie dies in der Fig. 4 beispielhaft gezeigt ist. Andernfalls, das heißt für den Fall, dass die beiden genannten Kriterien nicht erfüllt sind, verbleibt es bei der Bildschirmanzeige wie eingestellt und werden zum Beispiel Navigationsinformationen oder die von den Umfeld-Kameras 6 aufgenommenen Umgebungsbilder angezeigt.

Die Anordnung der Bildschirmkamera 13 am Gehäuse 12, wie in Fig. 4 gezeigt, ist nicht zwingend. Diese kann zum Beispiel auch lediglich in der Nähe des Bildschirms 4, zum Beispiel oberhalb diesem angeordnet sein. Ebenfalls ist die Integration des Bildschirms 4 in die hier lediglich schematisch angedeutete Instrumententafel hier lediglich beispielhaft gewählt, wie dies bereits zuvor dargelegt worden ist.

Die in der Fig. 4 gezeigte Spiegelbilddarstellung gilt, wie bereits zuvor beschrieben, als Beispiel für eine Spiegelbilddarstellung in Verbindung mit der zuvor beschriebenen Gesichtserfassungseinrichtung 5.

### Bezugszeichenliste

1 Nutzfahrzeug
2 Instrumententafel
3 Fahrerhaus
4 Bildschirm
5 Gesichtserfassungseinrichtung
6 Umfeld-Kameras
7 Schlafkabine
8 Zugmaschine
9 Auflieger
12 Gehäuse
13 Bildschirmkamera
14 Spiegelbild
15 A-Säule

## Patentansprüche

1. Vorrichtung zur Anzeige von Informationen in einem Fahrzeug, insbesondere in einem Nutzfahrzeug,
mit einem im Fahrzeug (1) angeordneten Bildschirm (4), mittels dem Informationen visuell anzeigbar sind,
wobei dem Bildschirm (4) eine Einrichtung zugeordnet ist, mittels der ein mittels wenigstens einer Kamera aufgenommenes Gesicht eines auf den Bildschirm (4) blickenden Betrachters in der Art eines Spiegelbildes auf dem Bildschirm (4) anzeigbar ist,
wobei dem Bildschirm (4) als Einrichtung eine Gesichtserfassungseinrichtung (5) zugeordnet ist, die so ausgebildet ist, dass diese bei Vorliegen definiert vorgegebener Kriterien das mittels wenigstens einer Kamera der Gesichtserfassungseinrichtung (5) aufgenommene Gesicht in der Art eines Spiegelbildes auf dem Bildschirm (4) anzeigt,
**dadurch gekennzeichnet,**
**dass** von der Gesichtserfassungseinrichtung (5) als Kriterium für eine Gesichtsanzeige auf dem Bildschirm (4) ermittelbar ist, ob dem Bildschirm (4) ein Gesicht für eine definierte Zeitdauer zugewandt ist und/oder ob sich das Gesicht in einem definierten Nahbereich zum Bildschirm (4) befindet, und/oder
**dass** die Gesichtserfassungseinrichtung (5) mit einer Aktivierungseinrichtung gekoppelt ist, die die Gesichtserfassungseinrichtung bei bewegtem Fahrzeug (1) deaktiviert und die die Aktivierung der Gesichtserfassungseinrichtung (5) bei Fahrzeugstillstand freigibt.

2. Vorrichtung nach Anspruch 1, **dadurch gekennzeichnet, dass** die Gesichtserfassungseinrichtung (5) eine Auswerteeinrichtung aufweist, mittels der die von der Gesichtserfassungseinrichtung (5) erfassten und/oder die der Gesichtserfassungseinrichtung (5) übermittelten Daten auswertbar sind, wobei die Auswerteeinrichtung bei Vorliegen der definiert vorgegebenen Kriterien die Anzeige des mittels der wenigstens einer Kamera aufgenommenen Gesichtes als Spiegelbild auf dem Bildschirm (4) freigibt.

3. Vorrichtung nach Anspruch 2, **dadurch gekennzeichnet,**
**dass** die Gesichtserfassungseinrichtung (5) wenigstens einen, vorzugsweise am Bildschirm (4) angeordneten, Abstandssensor aufweist, mittels dem ein Abstand eines Gesichtes zu dem Bildschirm (4) erfassbar und der Auswerteeinrichtung der Gesichtserfassungseinrichtung (5) übermittelbar ist, und
**dass** mittels der Auswerteeinrichtung überprüfbar ist, ob sich das Gesicht in dem definiert vorgegebenen Nahbereich zum Bildschirm (4) befindet.

4. Vorrichtung nach Anspruch 2 oder 3, **dadurch gekennzeichnet, dass** die von der wenigstens einen Kamera aufgenommenen Gesichtsbilddaten der Auswerteeinrichtung zuführbar sind, mittels der ein dem Bildschirm (4) zugewandtes Gesicht als Gesicht, insbesondere als nicht-personenbezogenes Gesicht, identifizierbar ist.

5. Vorrichtung nach einem der vorhergehenden Ansprüche, **dadurch gekennzeichnet, dass** dem Bildschirm (4) ein Betätigungselement (10), insbesondere ein Schalter und/oder Tasterelement, zugeordnet ist, bei dessen, vorzugsweiser manueller, Betätigung die Aufnahmefunktion der wenigstens einen Kamera (13) startet und gleichzeitig die Wiedergabe des Gesichtes auf dem Bildschirm (4) als Spiegelbild (14) erfolgt, und/oder dass dem Bildschirm (4) eine berührungslos arbeitende Aktivierungseinrichtung, insbesondere eine Gesten- und/oder Sprach- und/oder Objekterkennungseinrichtung als Aktivierungseinrichtung, zugeordnet ist, mittels der die wenigstens eine Kamera (13) berührungslos, insbesondere durch definierte Gesten und/oder definierte Sprachbefehle und/oder durch Erkennen definierter Objekte, aktivierbar ist und gleichzeitig die Wiedergabe des Gesichtes auf dem Bildschirm (4) als Spiegelbild (14) erfolgt.

6. Vorrichtung nach einem der vorhergehenden Ansprüche, **dadurch gekennzeichnet, dass** die wenigstens eine Kamera in der Nähe des Bildschirms (4) oder am Bildschirm (4) selbst, insbesondere an einem Gehäuse des Bildschirms (4), angeordnet ist.

7. Vorrichtung nach einem der vorhergehenden Ansprüche, **dadurch gekennzeichnet, dass** der Bildschirm (4) Bestandteil einer fahrzeugseitig angeordneten Anzeigevorrichtung ist, mittels der im Fahrbetrieb und/oder im Stillstand des Fahrzeugs standardmäßig fahr- und/oder fahrzeugspezifische Informationen anzeigbar sind, insbesondere dergestalt, dass der Bildschirm (4) Bestandteil eines Navigationssystems ist, mittels dem bei nicht aktiver Spiegelbild-Funktion auf dem Bildschirm (4) Navigationsinformationen anzeigbar sind, und/oder insbesondere dergestalt, dass der Bildschirm (4) mit wenigstens einer am Fahrzeug (1) angeordneten Umfeld-Erfassungseinrichtung (6), insbesondere mit wenigstens einer am Fahrzeug (1) angeordneten Umfeld-Kamera, gekoppelt ist, so dass bei nicht aktiver Spiegelbild-Funktion auf dem Bildschirm (4) die von der wenigstens einen Umfeld-Erfassungseinrichtung (6) erfassten Umgebungsinformationen und/oder Umgebungsbilder anzeigbar sind.

8. Vorrichtung nach einem der vorhergehenden Ansprüche, **dadurch gekennzeichnet, dass** der Bildschirm (4) fest im Fahrzeug (1) angeordnet und/oder verbaut ist, insbesondere der Bildschirm (4) im Bereich einer Instrumententafel (2) und/oder dachseitig und/oder im Bereich einer Schlafkabine (7) eines Führerhauses (3) und/oder an einer Fahrzeugsäule, insbesondere einer A- und/oder B-Säule, angeordnet und/oder verbaut ist.

9. Verfahren zur Anzeige von Informationen in einem Fahrzeug, insbesondere in einem Nutzfahrzeug,
mit einem im Fahrzeug (1) angeordneten Bildschirm (4), mittels dem Informationen visuell anzeigbar sind,
wobei dem Bildschirm (4) eine Einrichtung zugeordnet ist, bei deren Betätigung und/oder Aktivierung ein mittels wenigstens einer Kamera aufgenommenes Gesicht eines auf den Bildschirm (4) blickenden Betrachters in der Art eines Spiegelbildes auf dem Bildschirm (4) angezeigt wird,
wobei dem Bildschirm (4) als Einrichtung eine Gesichtserfassungseinrichtung (5) zugeordnet ist, mittels der bei Vorliegen definiert vorgegebener Kriterien das mittels der wenigstens einen Kamera der Gesichtserfassungseinrichtung (5) aufgenommene Gesicht in der Art eines Spiegelbildes auf dem Bildschirm (4) anzeigt wird,
**dadurch gekennzeichnet,**
**dass** von der Gesichtserfassungseinrichtung (5) als Kriterium für eine Gesichtsanzeige auf dem Bildschirm (4) ermittelt wird, ob dem Bildschirm (4) ein Gesicht für eine definierte Zeitdauer zugewandt ist und/oder ob sich das Gesicht in einem definierten Nahbereich zum Bildschirm (4) befindet, und/oder
**dass** die Gesichtserfassungseinrichtung (5) mit einer Aktivierungseinrichtung gekoppelt ist, die die Gesichtserfassungseinrichtung (5) bei bewegtem Fahrzeug (1) deaktiviert und die die Aktivierung der Gesichtserfassungseinrichtung (5) bei Fahrzeugstillstand freigibt.

10. Verfahren nach Anspruch 9, **dadurch gekennzeichnet, dass** die Gesichtserfassungseinrichtung (5) eine Auswerteeinrichtung aufweist, mittels der die von der Gesichtserfassungseinrichtung (5) erfassten und/oder die der Gesichtserfassungseinrichtung (5) übermittelten Daten dergestalt auswertbar sind, dass die Auswerteeinrichtung bei Vorliegen der definiert vorgegebenen Kriterien die Anzeige des mittels der wenigstens einer Kamera aufgenommenen Gesichtes als Spiegelbild auf dem Bildschirm (4) freigibt.

11. Verfahren nach Anspruch 10, **dadurch gekennzeichnet, dass** die Gesichtserfassungseinrichtung (5) wenigstens einen, vorzugsweise am Bildschirm angeordneten, Abstandssensor aufweist, mittels dem ein Abstand eines Gesichtes zu dem Bildschirm (4) erfasst und der Auswerteeinrichtung der Gesichtserfassungseinrichtung (5) übermittelt wird, wobei die Auswerteeinrichtung überprüft, ob sich das Gesicht in dem definiert vorgegebenen Nahbereich zum Bildschirm (4) befindet, und/oder dass die von der wenigstens einen Kamera aufgenommenen Gesichtsbilddaten der Auswerteeinrichtung zugeführt werden, mittels der ein dem Bildschirm zugewandtes Gesicht als Gesicht, insbesondere als nicht-personenbezogenes Gesicht, identifizierbar ist.

12. Verfahren nach einem der Ansprüche 9 bis 11, **dadurch gekennzeichnet, dass** dem Bildschirm (4) ein Betätigungselement (10), insbesondere ein Schalter und/oder Tasterelement, zugeordnet ist, bei dessen, vorzugsweiser manueller, Betätigung die Aufnahmefunktion der wenigstens einen Kamera (13) startet und gleichzeitig die Wiedergabe des Gesichtes auf dem Bildschirm (4) als Spiegelbild (14) erfolgt, und/oder dass dem Bildschirm (4) eine berührungslos arbeitende Aktivierungseinrichtung, insbesondere eine Gesten- und/oder Sprach- und/oder Objekterkennungseinrichtung als Aktivierungseinrichtung, zugeordnet ist, mittels der die wenigstens eine Kamera (13) berührungslos, insbesondere durch definierte Gesten und/oder definierte Sprachbefehle und/oder durch Erkennen definierter Objekte, aktivierbar ist und gleichzeitig die Wiedergabe des Gesichtes auf dem Bildschirm (4) als Spiegelbild (14) erfolgt.

13. Verfahren nach einem der Ansprüche 9 bis 12, **dadurch gekennzeichnet, dass** der Bildschirm (4) Bestandteil einer fahrzeugseitig angeordneten Anzeigevorrichtung ist, mittels der im Fahrbetrieb und/oder im Stillstand des Fahrzeugs standardmäßig fahr- und/oder fahrzeugspezifische Informationen angezeigt werden, insbesondere dergestalt, dass der Bildschirm (4) Bestandteil eines Navigationssystems ist, mittels dem bei nicht aktiver Spiegelbild-Funktion auf dem Bildschirm (4) Navigationsinformationen anzeigbar sind, und/oder insbesondere dergestalt, dass der Bildschirm (4) mit wenigstens einer am Fahrzeug (1) angeordneten Umfeld-Erfassungseinrichtung (6), insbesondere mit wenigstens einer am Fahrzeug angeordneten Umfeld-Kamera, dergestalt gekoppelt ist, dass bei nicht aktiver Gesichtserfassungseinrichtung (5) auf dem Bildschirm (4) die von der wenigstens einen Umfeld-Erfassungseinrichtung (6) erfassten Umgebungsinformationen und/oder Umgebungsbilder anzeigbar sind.

14. Fahrzeug, insbesondere Nutzfahrzeug, mit einer Vorrichtung nach einem der Ansprüche 1 bis 8.

## Claims

1. A device for the display of information in a vehicle, especially in a commercial vehicle,
having a display screen (4) disposed in the vehicle (1), by means of which information can be visually displayed,
wherein a device is associated with the display screen (4), by means of which a face of an observer looking at the display screen (4) that is recorded by means of at least one camera can be displayed on the display screen (4) in the manner of a mirror image,
wherein a face detection device (5) is associated with the display screen (4) as a device that is designed such that the same displays the face recorded by means of at least one camera of the face detection device (5) on the display screen (4) in the manner of a mirror image in the presence of defined specified criteria,
**characterized**
**in that** it can be determined by the face detection device (5), as a criterion for a face display on the display screen (4), whether a face is facing the display screen (4) for a defined period of time and/or whether the face is within a defined distance of the display screen (4), and/or
**in that** the face detection device (5) is coupled to an activation device, which deactivates the face detection device when the vehicle (1) is moving and enables the activation of the face detection device (5) when the vehicle is stationary.

2. The device according to Claim 1, **characterized in that** the face detection device (5) comprises an evaluation device, by means of which the data detected by the face detection device (5) and/or the data transmitted to the face detection device (5) can be evaluated, wherein the evaluation device enables the display of the face recorded by means of the at least one camera on the display screen (4) as a mirror image in the presence of the defined specified criteria.

3. The device according to Claim 2, **characterized in that**
the face detection device (5) comprises at least one distance sensor, preferably disposed on the display screen (4), by means of which a distance of a face from the display screen (4) can be detected and can be transmitted to the evaluation device of the face detection device (5), and
a check can be made by means of the evaluation device as to whether the face is within the defined specified distance of the display screen (4).

4. The device according to Claim 2 or 3, **characterized in that** the face image data recorded by the at least one camera can be delivered to the evaluation device, by means of which a face facing the display screen (4) can be identified as a face, especially as a face not related to a person.

5. The device according to any one of the preceding claims, **characterized in that** an actuating element (10), especially a switch and/or pushbutton element, is associated with the display screen (4), whose preferably manual operation starts the recording function of the at least one camera (13) and the reproduction of the face on the display screen (4) as a mirror image (14) takes place at the same time, and/or that a contactlessly working activation device, especially a gesture identification device and/or a voice identification device and/or an object identification device, is associated with the display screen (4) as an activation device, by means of which the at least one camera (13) can be activated contactlessly, especially by defined gestures and/or defined voice commands and/or by identifying defined objects, and the reproduction of the face on the display screen (4) as a mirror image (14) takes place at the same time.

6. The device according to any one of the preceding claims, **characterized in that** the at least one camera is disposed in the vicinity of the display screen (4) or on the display screen (4) itself, especially on a housing of the display screen (4).

7. The device according to any one of the preceding claims, **characterized in that** the display screen (4) is a component of a display device disposed on the vehicle, by means of which driving-specific information and/or vehicle-specific information can be displayed as standard in the driving mode and/or with the vehicle stationary, especially such that the display screen (4) is a component of a navigation system, by means of which navigation information can be displayed on the display screen (4) with the mirror image function not active, and/or especially such that the display screen (4) is coupled to at least one surroundings detection device (6) that is disposed on the vehicle (1), especially with at least one environment camera that is disposed on the vehicle (1), so that with the mirror image function not active the surroundings information detected by the at least one surroundings detection device (6) and/or images of the surroundings can be displayed on the display screen (4).

8. The device according to any one of the preceding claims, **characterized in that** the display screen (4) is fixedly disposed in and/or built into the vehicle (1), in particular the display screen (4) is disposed and/or built in within the vicinity of an instrument panel (2) and/or on the ceiling and/or in the vicinity of a sleeping cabin (7) of a driver's cab (3) and/or on a pillar of the vehicle, especially an A-pillar and/or a B-pillar.

9. A method for the display of information in a vehicle, especially in a commercial vehicle, with a display screen (4) disposed in the vehicle (1), by means of which information can be visually displayed,
wherein a device is associated with the display screen (4), on whose operation and/or activation a face of an observer looking at the display screen (4) that is recorded by means of at least one camera is displayed on the display screen (4) in the manner of a mirror image,
wherein a face detection device (5) is associated with the display screen (4) as a device, by means of which the face recorded by means of the at least one camera of the face detection device (5) is displayed on the display screen (4) in the manner of a mirror image in the presence of defined specified criteria,
**characterized**
**in that** it is determined by the face detection device (5), as a criterion for a face display on the display screen (4) whether a face is facing the display screen (4) for a defined period of time and/or whether the face is within a defined distance of the display screen (4), and/or
**in that** the face detection device (5) is coupled to an activation device, which deactivates the face detection device (5) when the vehicle (1) is moving and enables the activation of the face detection device (5) when the vehicle is stationary.

10. The method according to Claim 9, **characterized in that** the face detection device (5) comprises an evaluation device, by means of which the data detected by the face detection device (5) and/or the data transmitted to the face detection device (5) can be evaluated such that evaluation device enables the display of the face recorded by means of the at least one camera on the display screen (4) as a mirror image if the defined specified criteria exist.

11. The method according to Claim 10, **characterized in that** the face detection device (5) comprises at least one distance sensor, preferably disposed on the display screen, by means of which the distance of a face from the display screen (4) is detected and transmitted to the evaluation device of the face detection device (5), wherein the evaluation device checks whether the face is within the defined specified distance of the display screen (4), and/or that the face image data recorded by the at least one camera are delivered to the evaluation device, by means of which a face that is facing the display screen can be identified as a face, especially as a face that is not related to a person.

12. The device according to any one of Claims 9 to 11, **characterized in that** an actuating element (10), especially a switch and/or pushbutton element, is associated with the display screen (4), whose preferably manual operation starts the recording function of the at least one camera (13) and the reproduction of the face on the display screen (4) as a mirror image (14) takes place at the same time, and/or that a contactlessly working activation device, especially a gesture identification device and/or a voice identification device and/or an object identification device, is associated with the display screen (4) as an activation device, by means of which the at least one camera (13) can be contactlessly activated, especially by defined gestures and/or defined voice commands and/or by identifying defined objects, and the reproduction of the face on the display screen (4) as a mirror image (14) takes place at the same time.

13. The method according to any one of Claims 9 to 12, **characterized in that** the display screen (4) is a component of a display device disposed on the vehicle, by means of which travel-specific information and/or vehicle-specific information are displayed as standard in the driving mode and/or with the vehicle stationary, especially such that the display screen (4) is a component of a navigation system, by means of which with the mirror image function not active, navigation information can be displayed on the display screen (4), and/or especially such that the display screen (4) is coupled to at least one surroundings detection device (6) disposed on the vehicle (1), especially with at least one environment camera disposed on the vehicle, such that with the face detection device (5) not active the surroundings information and/or images of the surroundings detected by the at least one surroundings detection device (6) can be displayed on the display screen (4).

14. A vehicle, especially a commercial vehicle, with a device according to any one of Claims 1 to 8.

## Revendications

1. Ensemble d'affichage d'informations dans un véhicule, en particulier dans un véhicule utilitaire,
l'ensemble présentant un écran (4) disposé dans le véhicule (1) et au moyen duquel des informations peuvent être présentées visuellement,
un dispositif au moyen duquel le visage enregistré au moyen d'au moins une caméra d'un observateur regardant l'écran (4) peut être affiché sur l'écran (4) à la manière d'une image en miroir étant associé à l'écran (4),
comme dispositif, un dispositif (5) de saisie de visage configuré de telle sorte que lorsque des critères définis de manière prédéterminée sont satisfaits, il affiche à la manière d'un miroir sur l'écran (4) le visage enregistré au moyen d'au moins une caméra du dispositif (5) de saisie de visage étant associé à l'écran (4),
**caractérisé en ce que**
comme critère d'affichage d'un visage sur l'écran (4), le dispositif (5) de saisie d'image peut déterminer si un visage a été orienté pendant une durée définie vers l'écran (4) et/ou si le visage est situé à une proximité définie de l'écran (4) et/ou
**en ce que** le dispositif (5) de saisie de visage est raccordé à un dispositif d'activation qui désactive le dispositif de saisie de visage lorsque le véhicule (1) est en déplacement et qui lance l'activation du dispositif (5) de saisie d'image lorsque le véhicule est à l'arrêt.

2. Ensemble selon la revendication 1, **caractérisé en ce que** le dispositif (5) de saisie d'image présente un dispositif d'évaluation au moyen duquel les données saisies par le dispositif (5) de saisie d'image et/ou les données transmises au dispositif (5) de saisie d'image peuvent être évaluées, le dispositif d'évaluation lançant l'affichage comme image de miroir sur l'écran (4) du visage enregistré au moyen de la ou des caméras si des critères définis de manière prédéterminée sont satisfaits.

3. Ensemble selon la revendication 2, **caractérisé en ce que** le dispositif (5) de saisie de visage présente au moins un capteur de distance disposé de préférence sur l'écran (4) et au moyen duquel la distance entre un visage et l'écran (4) peut être saisie et transmise au dispositif d'évaluation du dispositif (5) de saisie de visage et **en ce que** le dispositif d'évaluation permet de vérifier si le visage est situé à une proximité définie de manière prédéterminée de l'écran (4).

4. Ensemble selon les revendications 2 ou 3, **caractérisé en ce que** les données d'image de visage enregistrées par la ou les caméras peuvent être amenées au dispositif d'évaluation au moyen duquel un visage tourné vers l'écran (4) peut être identifié comme visage et en particulier comme visage non associé à une personne particulière.

5. Ensemble selon l'une des revendications précédentes, **caractérisé en ce qu'**un élément d'actionnement (10), en particulier un commutateur et/ou un élément à touches, est associé à l'écran (4) et **en ce que** lorsqu'il est actionné de préférence manuellement, la fonction d'enregistrement de la ou des caméras (13) est lancée et simultanément le visage est représenté comme image de miroir (14) sur l'écran (4), et/ou **en ce qu'**un dispositif d'activation travaillant sans contact, en particulier un dispositif de détection de geste, de reconnaissance vocale ou de détection d'objets est associé à l'écran (4) en tant que dispositif d'activation au moyen duquel la ou les caméras (13) peuvent être activées sans contact en même temps qu'a lieu la présentation du visage sur l'écran (4) comme image de miroir (4), en particulier par des gestes définis, des commandes vocales définies et/ou la reconnaissance d'objets définis.

6. Ensemble selon l'une des revendications précédentes, **caractérisé en ce que** la ou les caméras sont disposées à proximité de l'écran (4) ou sur l'écran (4) proprement dit, en particulier sur un boîtier de l'écran (4).

7. Ensemble selon l'une des revendications précédentes, **caractérisé en ce que** l'écran (4) fait partie d'un ensemble d'affichage disposé sur le véhicule, et au moyen duquel, lorsque le véhicule roule ou est à l'arrêt, des informations concernant le roulage et/ou le véhicule peuvent être affichées de manière standard, en particulier par le fait que l'écran (4) fait partie d'un système de navigation au moyen duquel, lorsque la fonction d'image miroir n'est pas activée, des informations de navigation peuvent être affichées sur l'écran (4) et/ou en particulier par le fait que l'écran (4) est raccordé à au moins un dispositif (6) de saisie de l'environnement disposé sur le véhicule (1), en particulier à au moins une caméra d'environnement disposée sur le véhicule (1), de telle sorte que lorsque la fonction d'image miroir n'est pas activée, des informations sur l'environnement et/ou des images de l'environnement saisies par le ou les dispositifs (6) de saisie de l'environnement peuvent être affichées sur l'écran (4).

8. Ensemble selon l'une des revendications précédentes, **caractérisé en ce que** l'écran (4) est disposé fixement dans le véhicule (1) ou y est incorporé, et en particulier **en ce que** l'écran (4) est disposé et/ou incorporé au niveau du tableau de bord (2), sur le plafond, au niveau d'une cabine de repos (7) de l'habitacle (3) du conducteur et/ou sur un montant colonne du véhicule, en particulier un montant A et/ou un montant B.

9. Procédé d'affichage d'informations dans un véhicule, en particulier dans un véhicule utilitaire, avec
un écran (4) disposé dans le véhicule (1) et au moyen duquel des informations peuvent être présentées visuellement,
un dispositif qui, lorsqu'il est actionné et/ou activé, permet d'afficher sur l'écran (4) à la manière d'une image en miroir le visage d'un observateur regardant l'écran (4), enregistré au moyen d'au moins une caméra, étant associé à l'écran (4)
comme dispositif, un dispositif (5) de saisie de visage configuré de telle sorte que lorsque des critères définis de manière prédéterminée sont satisfaits, il affiche à la manière d'un miroir sur l'écran (4) le visage enregistré au moyen d'au moins une caméra du dispositif (5) de saisie de visage étant associé à l'écran (4),
**caractérisé en ce que**
comme critère d'affichage d'un visage sur l'écran (4), le dispositif (5) de saisie d'image peut déterminer si un visage a été orienté pendant une durée définie vers l'écran (4) et/ou si le visage est situé à une proximité définie de l'écran (4) et/ou
**en ce que** le dispositif (5) de saisie de visage est raccordé à un dispositif d'activation qui désactive le dispositif (5) de saisie de visage lorsque le véhicule (1) est en déplacement et qui lance l'activation du dispositif (5) de saisie d'image lorsque le véhicule est à l'arrêt.

10. Procédé selon la revendication 9, **caractérisé en ce que** le dispositif (5) de saisie d'image présente un dispositif d'évaluation au moyen duquel les données saisies par le dispositif (5) de saisie d'image et/ou les données transmises au dispositif (5) de saisie d'image peuvent être évaluées, le dispositif d'évaluation lançant l'affichage comme image de miroir sur l'écran (4) le visage enregistré au moyen de la ou des caméras si des critères définis de manière prédéterminée sont satisfaits.

11. Procédé selon la revendication 10, **caractérisé en ce que** le dispositif (5) de saisie de visage présente au moins un capteur de distance disposé de préférence sur l'écran (4) et au moyen duquel la distance entre un visage et l'écran (4) peut être saisie et transmise au dispositif d'évaluation du dispositif (5) de saisie de visage, **en ce que** le dispositif d'évaluation permet de vérifier si le visage est situé à une proximité définie de manière prédéterminée de l'écran (4) et/ou les données d'image de visage enregistrées par la ou les caméras peuvent être amenées au dispositif d'évaluation au moyen duquel un visage tourné vers l'écran peut être identifié comme visage et en particulier comme visage non associé à une personne particulière.

12. Procédé selon l'une des revendications 9 à 11, **caractérisé en ce que** qu'un élément d'actionnement (10), en particulier un commutateur et/ou un élément à touches, est associé à l'écran (4) et **en ce que** lorsqu'il est actionné de préférence manuellement, la fonction d'enregistrement de la ou des caméras (13) est lancée et simultanément le visage est représenté comme image de miroir (14) sur l'écran (4), et/ou **en ce qu'**un dispositif d'activation travaillant sans contact, en particulier un dispositif de détection de geste, de reconnaissance vocale ou de détection d'objets est associé à l'écran (4) en tant que dispositif d'activation au moyen duquel la ou les caméras (13) peuvent être activées sans contact en même temps qu'a lieu la présentation du visage sur l'écran (4) comme image de miroir (14), en particulier par des gestes définis, des commandes vocales définies et/ou la reconnaissance d'objets définis.

13. Procédé selon l'une des revendications 9 à 12, **caractérisé en ce que** l'écran (4) fait partie d'un ensemble d'affichage disposé sur le véhicule, et au moyen duquel, lorsque le véhicule roule ou est à l'arrêt, des informations concernant le roulage et/ou le véhicule peuvent être affichées de manière standard, en particulier par le fait que l'écran (4) fait partie d'un système de navigation au moyen duquel, lorsque la fonction d'image miroir n'est pas activée, des informations de navigation peuvent être affichées sur l'écran (4) et/ou en particulier par le fait que l'écran (4) est raccordé à au moins un dispositif (6) de saisie de l'environnement disposé sur le véhicule (1), en particulier à au moins une caméra d'environnement disposée sur le véhicule (1), de telle sorte que lorsque la fonction d'image miroir (5) n'est pas activée, des informations sur l'environnement et/ou des images de l'environnement saisies par le ou les dispositifs (6) de saisie de l'environnement peuvent être affichées sur l'écran (4).

14. Véhicule, en particulier utilitaire, doté d'un ensemble selon l'une des revendications 1 à 8.
